# EUROPÄISCHE PATENTANMELDUNG

(11) **EP 1 864 940 A1**
(43) Veröffentlichungstag der Anmeldung: **12.12.2007**
(21) Anmeldenummer: 06011830.4
(22) Anmeldetag: 08.06.2006
(51) Int. Cl.: B66F 9/075, B60K 1/04, B60S 5/06

(54) **Flurförderzeug mit seitlich entnehmbarer Energieversorgungseinheit**

(71) Anmelder: STILL GMBH, 22113 Hamburg (DE)
(72) Erfinder: Strugg, Gerald, 22761 Hamburg (DE)
(74) Vertreter: Geirhos, Johann

(57) **Zusammenfassung**

Die Erfindung betrifft ein Flurförderzeug (1) mit mindestens einer horizontal, insbesondere seitlich, entnehmbaren Energieversorgungseinheit (7), insbesondere einer Batterie (7), und einer Vorrichtung (2) zur Entnahme der Energieversorgungseinheit (7). Die Vorrichtung (2) zur Entnahme der Energieversorgungseinheit (7) weist mindestens ein von einer angehobenen Position (Fahrposition) in eine auf eine Fahrbahnoberfläche (14) abgesenkte Position (Entnahmeposition) bewegbares Standelement (10) auf.

## Beschreibung

Die Erfindung betrifft ein Flurförderzeug mit mindestens einer horizontal, insbesondere seitlich, entnehmbaren Energieversorgungseinheit, insbesondere einer Batterie, und einer Vorrichtung zur Entnahme der Energieversorgungseinheit.

Um ein Flurförderzeug optimal auszulasten, wird versucht, unproduktive Standzeiten zu minimieren. Ein wichtiger Faktor dabei sind die Standzeiten zur Ergänzung der Energievorräte, also beispielsweise der in einer Batterie gespeicherten elektrischen Ladung oder von in einem Tank gespeicherten flüssigen oder gasförmigen Energieträgern. Um diese Standzeiten zu minimieren, ist es bekannt, die Energieversorgungseinheit, also eine Batterie oder einen Tank oder ein Brennstoffzellenmodul mit integriertem Brennstoffspeicher, als austauschbares Element zu gestalten, so dass bei Erschöpfung der Vorräte die Energieversorgungseinheit komplett dem Flurförderzeug entnommen und durch eine andere Energieversorgungseinheit mit ausreichenden Energievorräten ersetzt werden kann. Insbesondere bei batteriegetriebenen Fahrzeugen wird dies häufig praktiziert, da die Ladezeiten für Batterien relativ groß sind.

Üblicherweise werden Energieversorgungseinheiten entweder mittels eines Krans nach oben aus dem Flurförderzeug heraus entnommen oder aber horizontal, zumeist seitlich, mittels einer geeigneten Vorrichtung. Derartige Vorrichtungen können beispielsweise fest mit dem Flurförderzeug verbunden oder Teil einer Batterieladestation sein. Auch die Verwendung von herkömmlichen Flurförderzeugen zu diesem Zweck ist bekannt, indem beispielsweise Batterien anhand spezieller Gabeltaschen mittels eines Gabelstaplers aufgenommen und entnommen werden können.

Fest mit dem Flurförderzeug verbundene Vorrichtungen beruhen zumeist auf einem schubladenähnlichen Prinzip, bei dem die Energieversorgungseinheit seitlich aus dem Fahrzeug herausgeführt wird, um dann beispielsweise mittels eines Krans angehoben oder auf einer geeigneten Unterlage abgesetzt zu werden. Dabei verlagert sich jedoch insbesondere bei schweren Energieversorgungseinheiten der Schwerpunkt des Fahrzeugs in Entnahmerichtung, wodurch die Gefahr besteht, dass das Flurförderzeug umkippt und beschädigt wird. Um dies zu vermeiden, sind meist aufwändige zusätzliche Sicherungsmaßnahmen, wie das Anbringen von Stützvorrichtungen, zu treffen, was den Wechsel der Energieversorgungseinheit erschwert und die Zeit dafür verlängert. Zudem müssen derartige Entnahmevorrichtungen sehr stabil ausgeführt sein, was zum einen das Gewicht des Flurförderzeugs erhöht und damit die Reichweite verringert und andererseits sehr viel Bauraum erfordert. Externe Vorrichtungen hingegen sind ebenfalls aufwändig und damit kostenintensiv und häufig an einen Einsatzort gebunden. Wird für den Wechsel der Energieversorgungseinheit ein zweites Flurförderzeug verwendet, muss dieses entweder eigens für diesen Zweck bereitgehalten werden oder ein vorhandenes Fahrzeug die Arbeit unterbrechen, was in beiden Fällen hohen Aufwand und große Kosten bedeutet.

Der Erfindung liegt daher die Aufgabe zugrunde, ein Flurförderzeug mit mindestens einer horizontal, insbesondere seitlich, entnehmbaren Energieversorgungseinheit, insbesondere einer Batterie, und einer Vorrichtung zur Entnahme der Energieversorgungseinheit zu schaffen, das eine einfache Entnahme der Energieversorgungseinheit ermöglicht, einfach und kostengünstig herstellbar ist, wenig Platz benötigt und einen flexiblen Einsatz des Flurförderzeugs zulässt.

Diese Aufgabe wird dadurch gelöst, dass die Vorrichtung zur Entnahme der Energieversorgungseinheit mindestens ein von einer angehobenen Position (Fahrposition) in eine auf eine Fahrbahnoberfläche abgesenkte Position (Entnahmeposition) bewegbares Standelement aufweist. Dadurch stützt sich die Vorrichtung zur Entnahme der Energieversorgungseinheit bei der Entnahme der Energieversorgungseinrichtung auf der Fahrbahnoberfläche auf und das Flurförderzeug wird von den Kräften der zu entnehmenden Energieversorgungseinrichtung entlastet. Damit können das Flurförderzeug und die Entnahmevorrichtung kleiner und damit leichter dimensioniert werden. Aufwändige Sicherungsmaßnahmen, wie Stützen, können entfallen.

Vorteilhafterweise umfasst das Standelement mindestens eine Gleitkufe. Dadurch kann die Entnahmevorrichtung einfach auf dem Untergrund bewegt und die Energieversorgungseinheit einfach entnommen werden. Bei geneigter Fahrbahnoberfläche wird eine unkontrollierte Bewegung durch die verbliebene Reibung dennoch wirkungsvoll vermieden.

Weiterhin ist es von Vorteil, wenn das Standelement mindestens eine Rolle und/oder mindestens ein Rad aufweist. Dadurch wird die Reibung zwischen der Entnahmevorrichtung und der Fahrbahnoberfläche reduziert und die Entnahme erleichtert.

In einer weiteren besonders vorteilhaften Ausbildung der Erfindung weist das Standelement mindestens zwei parallel zur Entnahmerichtung voneinander beabstandete Rollen und/oder Räder auf. Dadurch kann die Entnahmevorrichtung weitgehend ohne störende Reibung und damit besonders leicht auf der Fahrbahnoberfläche bewegt und die Energieversorgungseinheit einfach entnommen werden.

Weiterhin ist es vorteilhaft, wenn mindestens eine Rolle und/oder mindestens ein Rad elektrisch und/oder hydraulisch und/oder pneumatisch antreibbar ist. Dadurch kann die Vorrichtung insbesondere bei einer geneigten Fahrbahnoberfläche problemlos bewegt werden.

Weiterhin ist es von Vorteil, wenn die Vorrichtung zur Entnahme der Energieversorgungseinheit bei angehobenem Standelement mit dem Flurförderzeug selbsttätig kraftschlüssig und/oder formschlüssig verbindbar ist. Dadurch ist die Vorrichtung in der Fahrposition gegen Bewegungen und insbesondere gegen Herausfallen gesichert, ohne dass die Bedienperson dafür besondere Aufmerksamkeit aufwenden muss.

Zweckmäßigerweise ist das Standelement mittels einer elektrischen Antriebsvorrichtung von der angehobenen in die abgesenkte Position bewegbar. Elektrische Antriebe sind kompakt, kostengünstig und einfach aufgebaut. Bei nicht vollständig entladener Energieversorgungseinheit ist elektrische Energie einfach aus der Energieversorgungseinheit verfügbar.

In einer weiteren vorteilhaften Ausgestaltung der Erfindung ist das Standelement mittels einer hydraulischen und/oder pneumatischen Antriebsvorrichtung von der angehobenen in die abgesenkte Position bewegbar. Hydraulische Vorrichtungen sind kompakt und bringen große Hubkräfte auf. Pneumatische Vorrichtungen ermöglichen eine einstellbare Federwirkung.

Es ist ebenfalls von Vorteil, wenn das Standelement mittels einer mechanisch durch Muskelkraft betätigbaren Antriebsvorrichtung von der angehobenen in die abgesenkte Position bewegbar ist. Damit kann die Bedienperson unabhängig vom Energieinhalt der Energieversorgungseinheit die Vorrichtung betätigen. Es wird ein einfacher und störungsunanfälliger Aufbau ermöglicht.

In einer zweckmäßigen Weiterbildung der Erfindung umfasst die Vorrichtung zur Entnahme der Energieversorgungseinheit mindestens einen Spindeltrieb zum Anheben und/oder Absenken des Standelements. Ein Spindeltrieb bietet eine besonders einfache und robuste Möglichkeit zur Verstellung des Standelements. Gleichzeitig besteht eine große Sicherheit gegenüber einem unbeabsichtigten Anheben oder Absenken des Standelements.

Vorteilhafterweise weist die Vorrichtung zur Entnahme der Energieversorgungseinheit Mittel zum Fixieren der Energieversorgungseinheit auf. Dadurch wird verhindert, dass sich die Energieversorgungseinheit im Betrieb des Flurförderzeugs oder bei der Entnahme unkontrolliert bewegt.

In einer zweckmäßigen Ausbildung der Erfindung ist die Vorrichtung zur Entnahme der Energieversorgungseinheit dem Flurförderzeug vollständig entnehmbar. Dadurch kann die Vorrichtung getrennt vom Flurförderzeug bewegt werden. Es kann ein Austausch von Batterien mitsamt der Vorrichtung vorgenommen werden. Bei Wartungsarbeiten an der Entnahmevorrichtung ist diese leicht zugänglich und kann bei größeren Beschädigungen leicht ausgetauscht werden.

Weitere Vorteile und Einzelheiten der Erfindung werden im Folgenden anhand des in der Zeichnung dargestellten Ausführungsbeispiels näher erläutert. Gleiche Teile sind mit gleichen Bezugszeichen gekennzeichnet. Dabei zeigt
- Figur 1: eine schematische Seitenansicht des unteren Bereichs eines erfindungsgemäßen Flurförderzeugs mit einer erfindungsgemäßen Entnahmevorrichtung in Fahrposition,
- Figur 2: eine schematische Seitenansicht des unteren Bereichs eines erfindungsgemäßen Flurförderzeugs mit einer erfindungsgemäßen Entnahmevorrichtung in Entnahmeposition,
- Figur 3: eine schematische Ansicht des unteren Bereichs eines erfindungsgemäßen Flurförderzeugs entlang einer Schnittebene A-A in Figur 1 mit einer erfindungsgemäßen Entnahmevorrichtung in Fahrposition.

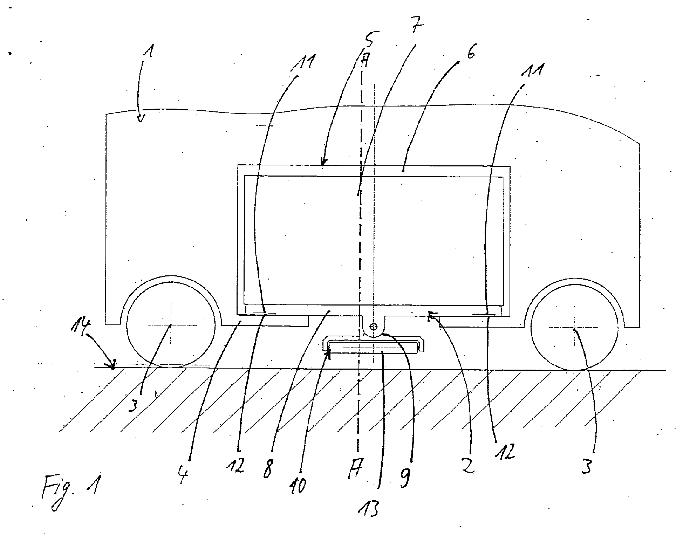

Figur 1 zeigt den unteren Bereich eines erfindungsgemäßen Flurförderzeugs 1 mit einer erfindungsgemäßen Entnahmevorrichtung 2 in Fahrposition. Zwischen zwei Achsen 3 weist ein Rahmen 4 des Flurförderzeugs 1 eine rechteckige Öffnung 5 auf, hinter der sich ein Batteriefach 6 befindet. Im Batteriefach 6 ist eine Batterie 7 auf einer Entnahmevorrichtung 2 gelagert. Die Entnahmevorrichtung 2 umfasst im Wesentlichen eine Trägerplatte 8, sowie eine Hebevorrichtung 9 mit einem Standelement 10, die beide an der Unterseite der Trägerplatte 8 angeordnet sind. Die Trägerplatte 8 stützt sich beidseits auf dem Rahmen 4 ab, wobei durch geeignete Ausnehmungen 11 in der Entnahmevorrichtung 2 sowie dazu passende Erhebungen 12 im Rahmen 4 des Flurförderzeugs 1 die Entnahmevorrichtung 2 formschlüssig gegen Verrutschen gesichert ist. Die Batterie 7 ist ebenfalls über hier nicht dargestellte Ausnehmungen und Erhebungen auf der Trägerplatte 8 fixiert. Das Standelement 10 besteht im Wesentlichen aus zwei hintereinander angeordneten Rollen 13, von denen hier nur die vordere Rolle 13 dargestellt ist. Das Standelement 10 befindet sich in der Fahrposition und hat keinen Kontakt zur Fahrbahnoberfläche 14.

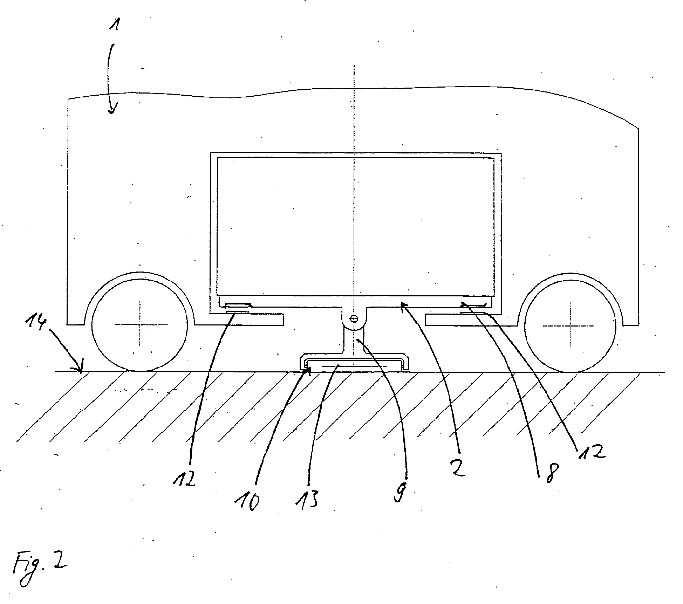

In Figur 2 ist das Flurförderzeug 1 mit einer Entnahmevorrichtung 2 in Entnahmeposition dargestellt. Die Hebevorrichtung 9 ist soweit abgesenkt, dass das Standelement 10 auf der Fahrbahnoberfläche 14 aufsteht und die Trägerplatte 8 soweit angehoben ist, dass die Erhebungen 12 frei sind. In dieser Position kann die Entnahmevorrichtung 2 seitlich aus dem Flurförderzeug 1 ausgefahren werden. Die Entnahme kann von einer Bedienperson von Hand vorgenommen werden, da die Entnahmevorrichtung 2 auf den Rollen 13 leicht bewegbar ist.

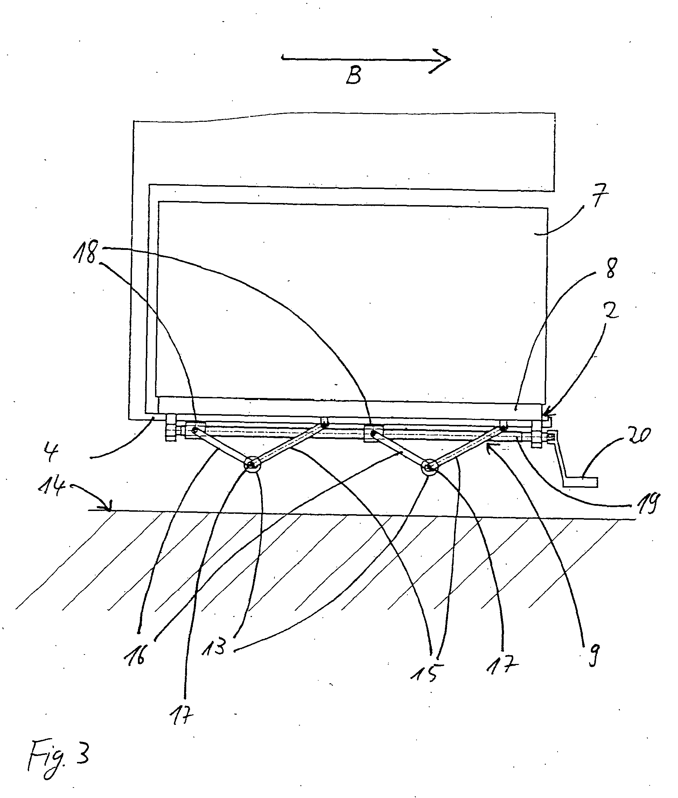

Figur 3 zeigt eine schematische Ansicht des unteren Bereichs eines erfindungsgemäßen Flurförderzeugs 1 entlang einer Schnittebene A-A in Figur 1 mit einer erfindungsgemäßen Entnahmevorrichtung 2 in Fahrposition, d.h. die Entnahmevorrichtung 2 liegt mit der Trägerplatte 8 auf dem Rahmen 4 des Flurförderzeugs 1 auf. In dieser Darstellung ist die Wirkungsweise der Hebevorrichtung 9 gezeigt. Die Rollen 13 sind an jeweils einem ersten Arm 15 und einem zweiten Arm 16 drehbeweglich gelagert, wobei die Achsen 17 der Rollen 13 gleichzeitig als Schwenklager zur Verbindung von erstem Arm 15 und zweitem Arm 16 dienen. Die ersten Arme 15 sind an der Trägerplatte 8 schwenkbar gelagert. Die zweiten Arme 16 sind an jeweils einer Gewindemutter 18 schwenkbar gelagert, wobei die Gewindemuttern 18 auf einer Spindel 19 geführt sind. Durch Drehung der Spindel 19 mittels einer aufsteckbaren Handkurbel 20 sind die Gewindemuttern 18 linear in Richtung des Pfeils B bewegbar. Durch diese Bewegung werden die Rollen 13 abgesenkt, bis sie mit der Fahrbahnoberfläche 14 in Kontakt kommen. Bei weiterer Drehung der Spindel 19 wird die Trägerplatte 8 angehoben, so dass diese in die in Figur 2 dargestellte angehobene Position (Entnahmeposition) erreicht und die Entnahmevorrichtung 2 in Richtung des Pfeils B aus dem Flurförderzeug 1 entnommen werden kann. Außerhalb des Flurförderzeugs 1 kann die Entnahmevorrichtung 2 mittels der Rollen 13 relativ leicht und frei bewegt werden, um beispielsweise die entleerte Batterie 7 mittels geeigneter Vorrichtungen gegen eine geladene auszutauschen, die in umgekehrter Reihenfolge wieder in das Flurförderzeug 1 eingeführt wird.

Selbstverständlich sind auch andere Ausführungsformen der Erfindung denkbar. So kann beispielsweise ein Antrieb der Rollen 13 vorgesehen sein, der die Entnahme weiter erleichtert. Dies kann beispielsweise mittels Elektromotoren erfolgen, die vorzugsweise mittels der in der Batterie 7 verbliebenen Restladung gespeist werden, wobei jedoch auch der Anschluss an eine externe Spannungsversorgung oder eine eigenständige kleine Batterie in der Entnahmevorrichtung 2 denkbar sind. Durch die Verwendung lenkbarer Rollen 13 und/oder Räder wird die Entnahmevorrichtung 2 leichter lenkbar und kann so mitsamt der Batterie 7 zu einer Ladestation bewegt werden, wobei im Gegenzug eine geladene Batterie mit einer weiteren Entnahmevorrichtung 2 in das Flurförderzeug 1 eingeführt werden kann. Auch die Verwendung einer Entnahmevorrichtung 2 in verschiedenen Typen von Flurförderzeugen 1 ist relativ einfach zu realisieren, indem der Rahmen 4 bei allen Typen in dem Bereich, in dem die Entnahmevorrichtung 2 gelagert ist, derart gestaltet ist, das die Entnahmevorrichtung 2 sicher aufgenommen wird, also beispielsweise durch eine identische Anordnung von Auflageflächen und Erhebungen 12.

Auch für die Hebevorrichtung 9 sind andere Ausführungsformen denkbar und sinnvoll. Beispielsweise kann der Antrieb der Vorrichtung mittels eines elektrischen Antriebs anstelle der Handkurbel 20 ausgeführt sein. Auch hier ist neben einer Versorgung mittels der Restladung der Batterie eine eigenständige Spannungsversorgung denkbar. Anstelle eines elektrischen Antriebs ist auch eine hydraulische Hebevorrichtung denkbar. Diese kann von einem Hydraulikkreis des Flurförderzeugs 1 oder mittels einer eigenen, elektrisch oder von Hand betätigten Pumpe gespeist werden.

Anstelle der Batterie 7 können selbstverständlich auch andere Energieversorgungseinheiten vorgesehen sein, wie beispielsweise ein Brennstoffzellenmodul mit Brennstoffspeicher oder ein Tank für flüssige und/oder gasförmige Stoffe. Die Fixierung der Energieversorgungseinheit 7 auf der Entnahmevorrichtung 2 kann ebenfalls je nach Anwendungsfall unterschiedlich ausgeführt sein, wobei bei einem Tausch der Energieversorgungseinheit 7 mitsamt der Entnahmevorrichtung 2 auch eine feste Verbindung von Energieversorgungseinheit 7 und Entnahmevorrichtung 2 denkbar ist. Die Fixierung der Entnahmevorrichtung 2 im Flurförderzeug 1 kann ebenfalls in anderer als der dargestellten Weise erfolgen, beispielsweise mittels Schraubverbindungen oder Spanngurten.

## Patentansprüche

1. Flurförderzeug (1) mit mindestens einer horizontal, insbesondere seitlich, entnehmbaren Energieversorgungseinheit (7), insbesondere einer Batterie (7), und einer Vorrichtung (2) zur Entnahme der Energieversorgungseinheit (7), **dadurch gekennzeichnet, dass** die Vorrichtung (2) zur Entnahme der Energieversorgungseinheit (7) mindestens ein von einer angehobenen Position (Fahrposition) in eine auf eine Fahrbahnoberfläche (14) abgesenkte Position (Entnahmeposition) bewegbares Standelement (10) aufweist.

2. Flurförderzeug (1) nach Anspruch 1, **dadurch gekennzeichnet, dass** das Standelement (10) mindestens eine Gleitkufe umfasst.

3. Flurförderzeug (1) nach Anspruch 1 oder 2, **dadurch gekennzeichnet, dass** das Standelement (10) mindestens eine Rolle (13) und/oder mindestens ein Rad aufweist.

4. Flurförderzeug (1) nach einem der Ansprüche 1 bis 3, **dadurch gekennzeichnet, dass** das Standelement (10) mindestens zwei parallel zur Entnahmerichtung voneinander beabstandete Rollen (13) und/oder Räder aufweist.

5. Flurförderzeug (1) nach einem der Ansprüche 1 bis 4, **dadurch gekennzeichnet, dass** mindestens eine Rolle (13) und/oder mindestens ein Rad elektrisch und/oder hydraulisch und/oder pneumatisch antreibbar ist.

6. Flurförderzeug (1) nach einem der Ansprüche 1 bis 5, **dadurch gekennzeichnet, dass** die Vorrichtung zur Entnahme der Energieversorgungseinheit bei angehobenem Standelement mit dem Flurförderzeug selbsttätig kraftschlüssig und/oder formschlüssig verbindbar ist.

7. Flurförderzeug (1) nach einem der Ansprüche 1 bis 6, **dadurch gekennzeichnet, dass** das Standelement (10) mittels einer elektrischen Antriebsvorrichtung von der angehobenen in die abgesenkte Position bewegbar ist.

8. Flurförderzeug (1) nach einem der Ansprüche 1 bis 7, **dadurch gekennzeichnet, dass** das Standelement (10) mittels einer hydraulischen und/oder pneumatischen Antriebsvorrichtung von der angehobenen in die abgesenkte Position bewegbar ist.

9. Flurförderzeug (1) nach einem der Ansprüche 1 bis 8, **dadurch gekennzeichnet, dass** das Standelement (10) mittels einer mechanisch durch Muskelkraft betätigten Antriebsvorrichtung (20) von der angehobenen in die abgesenkte Position bewegbar ist.

10. Flurförderzeug (1) nach einem der Ansprüche 1 bis 9, **dadurch gekennzeichnet, dass** die Vorrichtung (2) zur Entnahme der Energieversorgungseinheit (7) mindestens einen Spindeltrieb (19) zum Anheben und/oder Absenken des Standelements (10) umfasst.

11. Flurförderzeug nach einem der Ansprüche 1 bis 10, **dadurch gekennzeichnet, dass** die Vorrichtung (2) zur Entnahme der Energieversorgungseinheit (7) Mittel zum Fixieren der Energieversorgungseinheit aufweist.

12. Flurförderzeug (1) nach einem der Ansprüche 1 bis 11, **dadurch gekennzeichnet, dass** die Vorrichtung (2) zur Entnahme der Energieversorgungseinheit (7) dem Flurförderzeug (1) vollständig entnehmbar ist.

13. Vorrichtung (2) zur Entnahme einer Energieversorgungseinheit (7) aus einem Flurförderzeug (1) gemäß einem der Ansprüche 1 bis 12.

14. Vorrichtung (2) nach Anspruch 13, **dadurch gekennzeichnet, dass** die Vorrichtung (2) unabhängig vom Flurförderzeug (1) verwendbar ist.
